# EUROPEAN PATENT SPECIFICATION

(11) **EP 2 894 628 B1**
(45) Date of publication and mention of the grant of the patent: **17.04.2019**
(21) Application number: 14199194.3
(22) Date of filing: 19.12.2014
(51) Int. Cl.: G09G 5/14, H04N 21/431, H04N 21/81, H04N 5/44, H04N 13/356, H04N 13/332, H04N 13/30, H04N 13/398, H04N 21/422

(54) **Image display apparatus, and driving method thereof, using two remote control apparatus**
Bildanzeigevorrichtung, Ansteuerungsverfahren dafür, wobei zwei Fernsteuerungen verwendet werden
Appareil d'affichage d'image, procédé de commande associé, utilisant deux télécommandes

(30) Priority: 09.01.2014 KR 20140002791
(43) Date of publication of application: 15.07.2015
(73) Proprietor: Samsung Electronics Co., Ltd., Gyeonggi-do 443-742 (KR)
(72) Inventor: Lee, Chul-mok, Gyeonggi-do (KR)
(74) Representative: Appleyard Lees IP LLP

(56) References cited:
- EP-A1- 2 672 717
- US-A1- 2013 050 274

## Description

### BACKGROUND

### Field

Apparatuses and methods consistent with exemplary embodiments relate to an image display apparatus, a driving method thereof, and an image display method, and more particularly, to an image display apparatus which determines multi-view and realizes multi-view images according to whether a plurality of users give a control command through for example different remote controls, and a driving method and an image display method thereof.

### Description of the Related Art

In general, a multi-view function of a broadcast receiving apparatus enables two or more people to control or manipulate different broadcasts or applications. In order to use the multi-view function, general users activate the multi-view function using a menu or a setting application of the broadcast receiving apparatus, and control it using a remote control. In order to cancel the multi-view function, users use the menu or the setting application of the broadcast receiving apparatus again, or use a multi-view cancel shortcut button provided on the remote control.

In the related art, in order to drive or cancel the multi-view function, cumbersome processes such as using the menu or the setting application or using the shortcut button are required as described above.

In addition, whenever using the multi-view function, users have to set the channel or volume repeatedly.

US 2013/0050274 discloses a control apparatus including a command acquiring unit that acquires selection commands of pieces of content transmitted from a plurality of controllers, and a display processing unit that, when at least a part of users who use the plurality of controllers view same content, enlarges a display area of the content. The independent claims appended hereto are characterised over this document.

### SUMMARY

One or more exemplary embodiments overcome the above disadvantages and other disadvantages not described above. However, exemplary embodiments are not required to overcome the disadvantages described above, and one or more exemplary embodiments may not overcome any of the problems described above.

One or more exemplary embodiments provide an image display apparatus which determines multi-view and realizes multi-view images according to whether a plurality of users give a control command through for example different remote controls, and a driving method and an image display method thereof.

According to an aspect of an exemplary embodiment, there is provided an image display apparatus as defined by claim 1 of the claims appended hereto.

The image display apparatus may further include a storage configured to store a setting value regarding the multi-view viewing mode for each remote control apparatus and update the stored setting value. The controller may be arranged to control the image processor to process the first content image and the second content image based on the updated setting value.

The setting value may include at least one of two-dimensional (2D) and three-dimensional (3D) information, channel information, and volume information.

A number of the control commands may be the same as a number of the processed content images.

The controller may be arranged to preset and use apparatus information of the first and second remote control apparatuses by a pairing process.

The controller may additionally be arranged to determine whether a signal is received from 3D glasses in order to determine a format of the multi-view viewing, and when it is determined that a signal is received from the 3D glasses, the controller may be arranged to control the image processor to process and the display to display a 2D image and a 3D image together on a screen of the display.

According to an aspect of another exemplary embodiment, there is provided a method of driving an image display apparatus as defined by claim 7 of the claims appended hereto.

The method may further include storing a setting value regarding the multi-view viewing mode for each user and update the stored setting value. In the operation of processing the content images, the first content image and the second content image may be processed based on the updated setting value.

The setting value may include at least one of two-dimensional (2D) and three-dimensional (3D) information, channel information, and volume information.

The number of the control commands may be identical to the number of the processed content images.

The method may further include presetting apparatus information of the first and second remote control apparatuses by a pairing process.

The method may further include determining whether a signal is received from 3D glasses in order to determine a format of the multi-view viewing mode, and in response to it being determined that a signal is received from the 3D glasses, processing and displaying the first content image and the second content image as a 2D image and a 3D image together on a screen.

According to an aspect of another exemplary embodiment, there is provided an image display method including displaying a first content image corresponding to a first control command received from a first remote control apparatus on a screen, and in response to receiving a second control command from a second remote control apparatus while the first content image is displayed, displaying the first content image and a second content image corresponding to the first control command and the second control command, respectively, in a multi-view viewing mode.

In the displaying the first content image and the second content image in the multi-view viewing mode, the screen may be spatially divided so that the plurality of content images are displayed separately.

In the displaying the first content image and the second content image in the multi-view viewing mode, the plurality of content images may be displayed separately in a time division method.

At least one of the first content image and the second content image may be a 3D image.

The first content image and the second content image may be displayed based on previous viewing information of users who previously used the first remote control apparatus and the second remote control apparatus.

The previous viewing information may include at least one of two-dimensional (2D) and three-dimensional (3D) information, channel information, and volume information.

According to an aspect of another exemplary embodiment, there is provided an image display apparatus including an interface configured to receive a plurality of control commands corresponding to a plurality of user apparatuses; a display; and a controller configured to, in response to receiving the plurality of control commands, control the display to display a plurality of content images corresponding to the plurality of control commands in a multi-view viewing mode.

The controller may be further configured to, while the plurality of content images are displayed on the display in the multi-view viewing mode, control the display to display the plurality of content images using at least one among a time division method, a spatial division method, a chromatic division method, and a polarization division method.

The image display apparatus may further include a storage configured to store a plurality of setting values regarding the multi-view viewing mode corresponding to respective user apparatuses among the plurality of user apparatuses. The controller may be further configured to control the display to display the plurality of content images based on the respective setting values.

The controller may be further configured to control the display to display the plurality of content images in multi-view viewing mode without the use of a menu.

According to yet another aspect of the one or more exemplary embodiments, an image display method of a display apparatus includes, in response to receiving the plurality of control commands corresponding to a plurality of user apparatuses, displaying a plurality of content images corresponding to the plurality of control commands in a multi-view viewing mode.

The displaying the plurality of content images in the multi-view viewing mode comprises displaying the plurality of content images using at least one among a time division method, a spatial division method, a chromatic division method, and a polarization division method.

The display method may further include storing a plurality of setting values regarding the multi-view viewing mode for corresponding to respective user apparatuses among the plurality of user apparatuses. The displaying the plurality of content images in the multi-view viewing mode comprises displaying the plurality of content images based on the respective setting values.

The displaying the plurality of content images in the multi-view viewing mode is accomplished without the use of a menu

According to the present invention there is provided an apparatus and method as set forth in the appended claims. Other features of the invention will be apparent from the dependent claims, and the description which follows.

### BRIEF DESCRIPTION OF THE DRAWING FIGURES

The above and/or other aspects of one or more exemplary embodiments will be more apparent by describing certain exemplary embodiments with reference to the accompanying drawings, in which:
FIG. 1A illustrates an image display system according to an exemplary embodiment;
FIG. 1B illustrates the image display system as shown in FIG. 1A with a change of the user apparatuses according to an exemplary embodiment;
FIGs. 2A, 2B and 2C illustrate examples of multi-view formats according to exemplary embodiments;
FIG. 3 is a block diagram of a configuration of the image display apparatus shown in FIG. 1A according to an exemplary embodiment;
FIG. 4 is a block diagram of a configuration of the image processor shown in FIG. 3 according to an exemplary embodiment;
FIG. 5 is a flow chart of a driving process of the image display apparatus according to an exemplary embodiment; and
FIG. 6 is a flow chart of an image display method according to an exemplary embodiment of.

### DETAILED DESCRIPTION

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments can be carried out without those specifically defined matters. Also, well-known functions or constructions are not described in detail since they would obscure the invention with unnecessary detail.

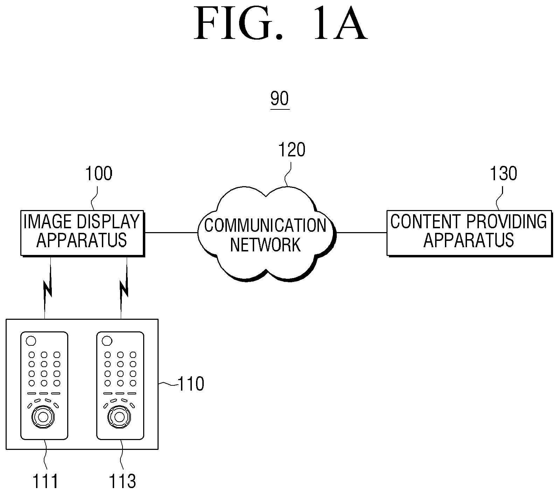

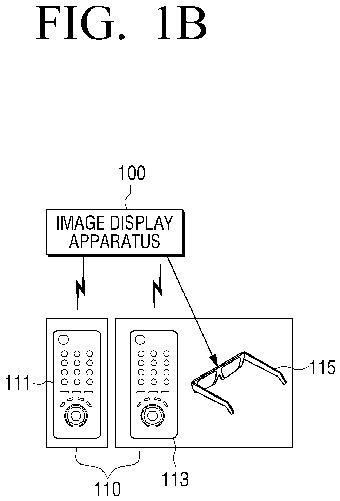

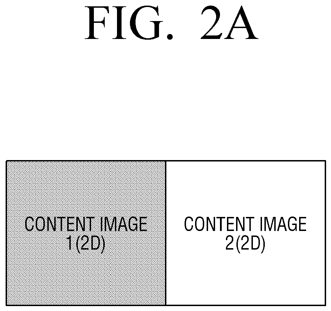

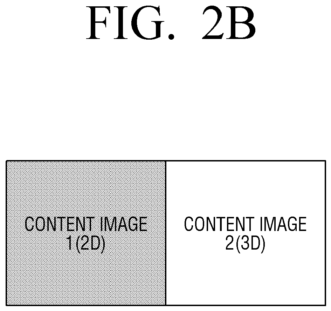

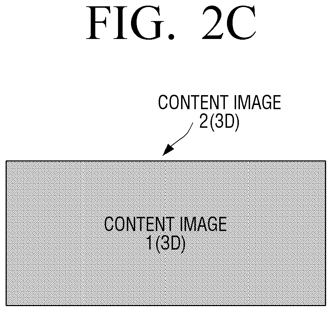

FIG. 1A illustrates an image display system according to an exemplary embodiment, FIG. 1B illustrates the image display system as shown in FIG. 1A with a change according to an exemplary embodiment, and FIGs. 2A, 2B, and 2C illustrate examples of multi-view formats according to exemplary embodiments.

With reference to FIGs. 1A to 2C, the image display system 90 may include an image display apparatus 100, a plurality of user apparatuses 110, a communication network 120, and a content providing apparatus 130.

The image display apparatus 100 may include, as non-limiting examples, a touch screen type image display apparatus (not shown), a spontaneous emission display apparatus such as organic light emitting diodes (OLED) (not shown), or a light receiving display apparatus such as a liquid crystal display (LCD) apparatus (not shown). In addition, the image display apparatus 100 may be, as non-limiting examples, a display apparatus such as a computer, a mobile phone, or television (TV). The light receiving display apparatus may include a separate backlight unit to provide light. The backlight unit may include LEDs.

The image display apparatus 100 determines whether user commands (or control commands) to watch multi-view content are received from a plurality of users, more precisely, from the plurality of user apparatuses 110, and performs a multi-view function according to the determination results. The image display apparatus 100 may assume diverse situations to perform the multi-view function. Above all, in this exemplary embodiment, whether different users give user commands may be considered significant. In other words, the image display apparatus 100 stores viewing information (or a setting value) regarding a content image that a user watches last, and when the user starts watching a different content image, the image display apparatus 100 may utilize the viewing information stored in an internal memory. Of course, when the same user gives user commands through different remote control apparatuses 111 and 113, the multi-view viewing is possible.

More specifically, in order to realize the multi-view, the image display apparatus 100 may perform pairing process with the plurality of user apparatuses 110 first. In other words, through the pairing process, the plurality of user apparatuses 110 are registered as objects to control the image display apparatus 100. To do so, when remote control apparatus 1 (111) requests registration of use, the image display apparatus 100 approves the request and stores apparatus information regarding remote control apparatus 1 (111). Remote control 2 (113) also performs the same registration process. Subsequently, when remote control apparatus 1 (111) gives a user command to watch content image 1, and remote control apparatus 2 (113) also gives a user command to watch content image 2, the image display apparatus 100 determines this situation and performs the multi-view function.

For example, in response to receiving a power-on request from remote control apparatus 1 (111), the image display apparatus 100 may be powered and display on the screen a content image most recently watched using remote control apparatus 1 (111). Subsequently, in response to receiving a power-on request from remote control apparatus 2 (113), the image display apparatus 100 may display on the screen a content most recently watched using remote control apparatus 2 (113), and display content image 1 and content image 2 as multi-view.

In this exemplary embodiment, when receiving power-on requests from remote control apparatus 1 (111) and remote control apparatus 2 (113), the image display apparatus 100 determines multi-view. However, it is possible for the image display apparatus 100 to determine multi-view by using other function buttons, or according to how a power button of the image display apparatus 100 is pressed, such as a press and hold, instead of using the plurality of user apparatuses 110. Diverse methods may be used according to an initially set method. Above all, in this exemplary embodiment, any method is allowable if cumbersome process of the related art such as calling a menu to set multi-view viewing may be omitted. In other words, it is preferable to simply use an external button of the image display apparatus 100 or buttons of remote control apparatuses 1 and 2 (111 and 113).

In addition, the image display apparatus 100 may realize diverse types of images according to what types of user apparatuses 110 are used. In other words, when the plurality of remote control apparatuses 1 and 2 (111 and 113) are used as shown in FIG. 1A, two-dimensional (2D) images may be simply displayed as shown in FIG. 2A. When the user who uses remote control apparatus 2 (113) wears user glasses 115 or turn on the user glasses 115 as shown in FIG. 1B, a 2D image and a three-dimensional (3D) image may be displayed as shown in FIG. 2B. In addition, it is possible for a plurality of users to watch 3D images of different contents by time division as shown in FIG. 2C.

During this process, the image display apparatus 100 may display images in diverse methods according to what content images the users watch last using remote control apparatus 1 (111) and remote control apparatus 2 (113), and according to in what implementation method the users watch the corresponding images. For example, when a user watches a broadcast program on channel 7 using remote control apparatus 1 (111) in 2D and adjusts the volume to 11, the image display apparatus 100 stores these conditions as viewing information of the user. When the image display apparatus 100 receives a viewing request from remote control apparatus 1 (111) again, the image display apparatus 100 displays an image on the screen based on the viewing information. If the user watched a 3D image most recently, when the image display apparatus 100 does not receive any signal from the user glasses, the image display apparatus 100 may display an image based on viewing information regarding a 2D image that the user watched last, or the image display apparatus 100 may convert the lastly watched 3D image into a 2D image and display the converted 2D image.

The plurality of user apparatuses 110 may be referred to as a user apparatus unit. The plurality of user apparatuses 110 may include remote control apparatuses 1 and 2 (111 and 113) as shown in FIG. 1A, and may further include the user glasses 115 as shown in FIG. 1B. Other diverse alterations may be applied. Remote control apparatuses 1 and 2 (111 and 113) may be used after performing separate pairing process in order to control the image display apparatus 100. If remote control apparatuses 1 and 2 (111 and 113) are compatible with the image display apparatus 100, the separate pairing process may be omitted. Although two user apparatuses 111 and 113 are shown, this is merely exemplary, and the plurality of user apparatuses 110 may include 3 or more user apparatuses.

In addition, the plurality of user apparatuses 110 may determine a button to be used as a function button for multi-view operation while performing the pairing process with the image display apparatus 100. For example, in this exemplary embodiment, it has been assumed that multi-view is implemented using the power button. However, the plurality of user apparatuses 110 are paired when the image display apparatus 100, the image display apparatus 100 may set a different button of the plurality of user apparatuses 110 to be a button to request multi-view viewing. Accordingly, it is possible to perform multi-view viewing using any user apparatus.

The communication network 120 may include wired and/or wireless communication networks. The wired network may include a cable network, and an internet network such as a public switched telephone network (PSTN). The wireless network may include code division multiple access (CDMA), wideband CDMA (WCDMA), global system for mobile communication (GSM), evolved packet core (EPC), long term evolution (LTE), wireless broadband internet (WiBro) networks. When the communication network 120 is a wired communication network, an access point may access a telephone exchange office, or when the communication network 120 is a wireless communication network, an access point may process data by accessing a serving general packet radio service (GPRS) support node (SGSN) or a gateway GPRS support node (GGSN) which is operated by a mobile carrier or may process data by accessing diverse repeaters such as base station transmission (BTS), NodeB, e-NodeB, and the like.

In addition, the communication network 120 may include a small base station (AP) (not shown) such as femto and pico base stations which are installed mostly in a building. The femto base station and pico base station are distinguished according to how many image display apparatuses 100 can access the base station. The AP includes a local area communication module to perform local area communication, such as Zigbee and wireless fidelity (Wi-Fi), with the image display apparatus 100. In one or more exemplary embodiments, the local area communication may be performed in diverse standards of radio frequency (RF) and ultra wideband (UWB) communication such as Bluetooth, Zigbee, IrDA, ultra high frequency (UHF), and very high frequency (VHF) as well as wireless fidelity (Wi-Fi). Accordingly, the AP extracts a location of a data packet, sets an optimal communication path for the extracted location, and transmits the data packet to a subsequent apparatus, for example, to the image display apparatus 100 along the set communication path.

The content providing apparatus 130 includes a broadcasting server operated by a broadcasting station. In addition, the content providing apparatus 130 may include a server of an image content provider which provides diverse image contents.

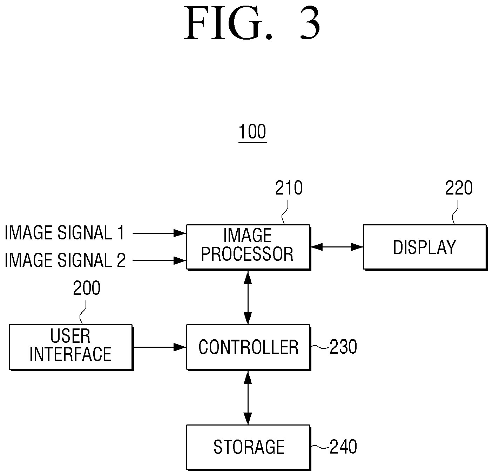

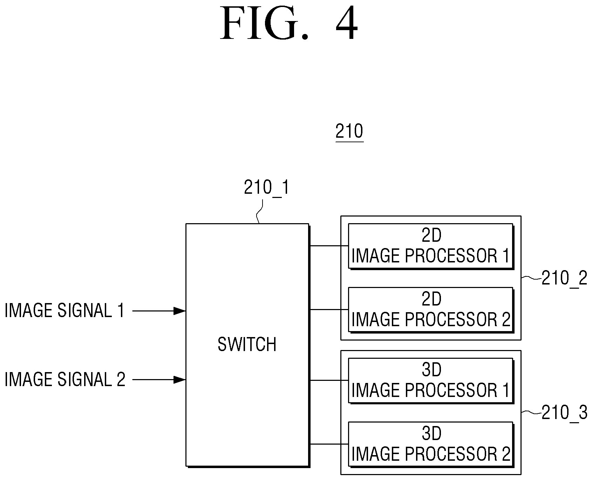

FIG. 3 is a block diagram of a configuration of the image display apparatus 100 shown in FIG. 1A according to an exemplary embodiment, and FIG. 4 is a block diagram of a configuration of the image processor 210 shown in FIG. 3 according to an exemplary embodiment.

With reference to FIGs. 3 and 4 together with FIG. 1A, the image display apparatus 100 may include, in part or in whole, a user interface 200, an image processor 210, a display 220, a controller 230, and a storage 240.

Including the components in part or in whole indicates excluding some components such as the storage 240, integrating some components such as the image processor 210 into another component such as the controller 230, or including additional components not shown. For sufficient understanding of the invention, let's assume that the image display apparatus 100 includes all of the components.

The user interface 200 receives a user command from the plurality of user apparatuses 110 shown in FIG. 1, and transmits the user command to the controller 230. The user command may generate diverse signals such as a power-on/off signal, a channel change signal, and a volume control signal.

The image processor 210 processes an input image signal and outputs the processed image signal to the display 220. The image processor 210 may include a 2D image processor 210_2 to process a 2D image, and a 3D image processor 210_3 to process a 3D image, as shown in FIG. 4. The 2D image processor 210_2 and the 3D image processor 210_3 each may include a plurality of sub image processors. Accordingly, the image processor 210 may include a switch 210_1 to select a sub image processor.

For example, when the controller 230 receives a user command and determines that the display 220 is spatially divided to display two 2D content images separately, the image processor 210 may drive both 2D image processors 1 and 2 in the 2D image processor 210_2. When a 2D content image and a 3D content image are displayed, the image processor 210 may drive one of 2D image processors 1 and 2 in the 2D image processor 210_2, and one of 3D image processors 1 and 2 in the 3D image processor 210_3. During this process, the 3D image processor 210_3 may process an input 3D image and output the 3D image as it is, or may convert an input 2D image into a 3D image and output the 3D image. Accordingly, in this exemplary embodiment, how to generate an image in order to implement multi-view is not limited. For example, the image processor 210 may designate an input 2D image as a left-eye image, and generate a right-eye image by shifting the left-eye image using acquired depth information. Further, although in this exemplary embodiment, two image processors 210_2 and 210_3 are illustrated, this is merely an example, and the image processor 210 may include only a single image processor or three or more image processors may be used. Further although in this exemplary embodiment two sub-image processors are illustrated for each image processor 210_2 and 210_3, this is merely an example, and an image processor may include only a single sub-image processor or three or more sub-image processors.

The display 220 may implement multi-view by spatially dividing the screen, or may implement multi-view of two 2D or 3D images by time division. For example, when an image of 60 frames per 1 second is implemented, 30 frames implement content image 1 in 2D or 3D, the remaining 30 frames implement content image 2 in 2D or 3D. Content images 1 and 2 may be implemented alternately. For example, in the case of 3D images, a left-eye image and a right-eye image for one frame of content image 1 are displayed, and subsequently a left-eye image and a right-eye image for one frame of content image 2 are displayed. However, these implementations are merely examples and the display 220 may implement multi-view of two 2D or 3D images through other means, such as chromatic division, polarization, or a combination of any of the techniques.

The controller 230 controls overall operations of the user interface 200, the image processor 210, and the storage 240 in the image display apparatus 100. In other words, in response to receiving a user command from the user interface 200, the controller 230 analyzes (or determines) the user command and determines whether to perform the multi-view viewing. For example, when user A gives a power-on command to the image display apparatus 100 and subsequently user B gives a power-on command to the same image display apparatus 100, the controller 230 determines whether to perform multi-view viewing based on this situation. Apparatus information of user apparatuses which are used by users A and B may be preset in the image display apparatus 100, and may be stored as different apparatus information. The apparatus information may be apparatus information of the remote control apparatuses 1 and 2 (111 and 113) shown in FIG. 1.

When multi-view viewing is requested, the controller 230 controls the image processor 210. As described above with the image processor 210, the controller 230 determines whether multi-view viewing is requested, and the controller 230 controls the image processor 210 to implement multi-view viewing with reference to previous viewing information of the user according to the determination results. For example, when a user requests the image display apparatus 100 to implement 2D but previous viewing information relates to 3D implementation, the controller 230 may control the image processor 210 with reference to viewing information regarding 2D implementation earlier than the previous viewing information.

The storage 240 may store information processed by the image display apparatus 100 under the control of the controller 230. For example, when a power-on command is received from the remote control apparatus 1 (111) through the user interface 200, the storage 240 stores information regarding the received power-on command, and when a power-on command is received from remote control apparatus 2 (113) through the user interface 200, the storage 240 stores information regarding the received power-on command. Subsequently, when the controller 230 requests the information, the storage 240 provides the stored information regarding the user command. In addition, the storage 240 stores viewing information of each user received through the user interface 200, and updates the stored viewing information. The viewing information of each user may be viewing information provided using each of the remote control apparatuses 1 and 2 (111 and 113). For example, when a user watches a broadcast program on channel 7 using the remote control apparatus 1 (111) in 3D and adjusts the volume to 11, the storage 240 stores these conditions as viewing information of the user. The viewing information may include other diverse information.

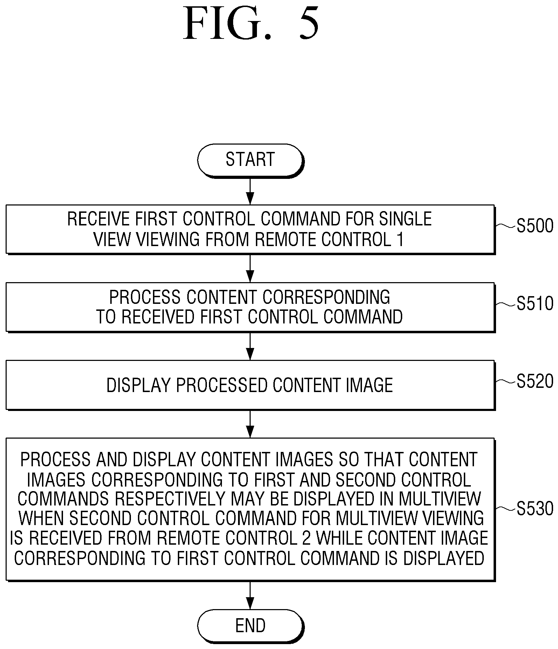

FIG. 5 is a flow chart of a driving process of the image display apparatus 100 according to an exemplary embodiment.

With reference to FIG. 5 together with FIG. 1 for convenient description, the image display apparatus 100 receives a first control command for single view viewing from the remote control apparatus 1 (111) (S500). The first control command may be a command given by pressing the power button of remote control apparatus 1 (111).

Subsequently, the image display apparatus 100 processes content corresponding to the received first control command (S510). To do so, the image display apparatus 100 may use user viewing information, which is stored in the internal memory, regarding a program that the user of the remote control apparatus 1 (111) watched last, or may process content of a channel selected by the user. Processing the content includes demultiplexing, scaling, and the like.

Subsequently, the image display apparatus 100 displays the processed content image on the screen (S520).

Subsequently, when the image display apparatus 100 receives a second control command for multi-view viewing from remote control apparatus 2 (113) while displaying the content image corresponding to the first control command, the image display apparatus 100 processes and displays content images so that the plurality of content images corresponding to the first and second control commands respectively may be displayed in multi-view (S530). The second control command may be a command given by pressing the power button of remote control apparatus 2 (113). Although in FIG. 5 the second control command is received after the processed content corresponding to the first control command is displayed, this is merely an example, and the second control command may be received before any of the previous steps.

More specifically, the image display apparatus 100 may receive a plurality of user commands, that is to say control commands, for multi-view viewing. The user commands may be user commands having the same characteristics. The user commands having the same characteristics may be a power-on command of remote control apparatus 1 (111) shown in FIG. 1, and a power-on command of remote control apparatus 2 (113). In addition, the user commands may be user commands having the same characteristics which are given by different apparatuses. The same characteristics indicate commands to perform the same function. Although in this exemplary embodiment the image display apparatus 100 may receive a plurality of user commands using only the power button of the image display apparatus 100, one or more exemplary embodiments are not limited to the above description. In other words, when the power button of the image display apparatus 100 is pressed once and is pressed again, the image display apparatus 100 may determine whether the second pressing is a user command for multi-view viewing or a user command to turn off the image display apparatus 100 by, for example, determining a period of time being pressed during the second pressing.

Subsequently, the image display apparatus 100 determines multi-view viewing based on the plurality of user commands. For example, when user commands having the same characteristics are received from different user apparatuses, the image display apparatus 100 may determine that the user commands wish multi-view viewing. However, since there may be diverse methods for determining multi-view viewing, one or more exemplary embodiments are not limited to determining multi-view viewing using the power button.

In addition, the image display apparatus 100 processes content images for multi-view viewing according to the determination results. In other words, as a non-limiting example, when viewing information of a program that a user watched last using the remote control apparatus 1 (111) shown in FIG. 1 is channel 7, 2D broadcasting, and volume 11, and when viewing information of a program that a user watched last using the remote control apparatus 2 (113) shown is channel 9, 3D broadcasting, and volume 11, content images are processed to implement 2D broadcasting on channel 7 and 3D broadcasting on channel 9 based on the last viewing information. On the two channels, the volume is set to 11.

Accordingly, the image display apparatus 100 displays the content images processed for multi-view on the screen. In the above example, a 2D image and a 3D image are displayed on the screen.

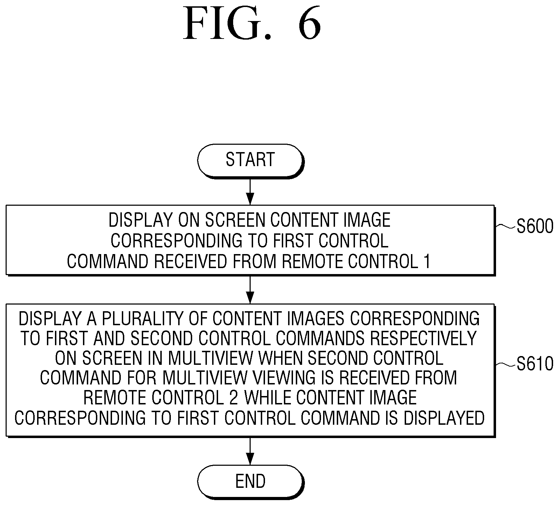

FIG. 6 is a flow chart of an image display method according to an exemplary embodiment.

With reference to FIG. 6 together with FIG. 1 for convenience of description, the image display apparatus 100 displays on the screen a content image corresponding to a first control command received from remote control apparatus 1 (111) (S600).

Subsequently, when the image display apparatus 100 receives a second control command for multi-view viewing from remote control apparatus 2 (113) while displaying the content image corresponding to the first control command, the image display apparatus 100 displays a plurality of content images corresponding to the first and second control commands respectively on the screen in multi-view (S610).

More specifically, the image display apparatus 100 displays a first content image on the screen in single view in accordance with a user command of a first user, more precisely, in accordance with a user command from remote control apparatus 1 (111). The user command may be a power-on command. The single view indicates displaying single content on the screen.

Subsequently, the image display apparatus 100 determines whether a user command for multi-view viewing is received from a second user. For example, when the image display apparatus 100 receives a power-on command from remote control apparatus 2 (113), the image display apparatus 100 determine that the user wants multi-view viewing.

Subsequently, when the image display apparatus 100 determines that the user command for multi-view viewing is received from the second user, the image display apparatus 100 implements the first content image for the first user and the second content image for the second user in multi-view and displays them on the screen.

When implementing the multi-view, the image display apparatus 100 may implement the first content image and the second content image based on viewing information regarding the last broadcasting program watched by the first user and by the second user, more precisely, using the remote control apparatus 1 (111) and using remote control apparatus 2 (113), respectively. Since detailed description has been provided above, further description is not repeated.

In addition, when being paired with the remote control apparatuses 111 and 113, the image display apparatus 100 identifies the remote control apparatuses 111 and 113, determines users based on identified information, and displays a plurality of contents based on setting values stored according to the users in a multi-view viewing mode.

Although the components of one or more exemplary embodiments are described to be combined into one or to be operated by combination, one or more exemplary embodiments are not limited thereto. Within the scope of the purpose of one or more exemplary embodiments, one or more components may be selectively combined and operated. In addition, each of the components may be implemented with independent hardware, or a portion of or all of the components may be selectively combined and be implemented with a computer program having a program module which performs a portion of or all of the functions combined in one or more pieces of hardware. The codes and the code segments which compose the computer program may easily be inferred by those skilled in the art. The computer program is stored in a non-transitory computer readable medium, and is read and run by a computer, a processor, or a controller so that one or more exemplary embodiments may be implemented.

The non-transitory computer readable medium is a medium which does not store data temporarily such as a register, cash, and memory but stores data semi-permanently and is readable by devices. More specifically, the computer program may be stored in non-transitory computer readable media such as compact disks (CDs), digital video disks (DVDs), hard disks, Blu-ray disks, universal serial buses (USBs), memory cards, and read-only memory (ROM).

## Claims

1. An image display apparatus (100) comprising:
an interface (200) configured to receive, in use, a first control command for single view viewing from a first remote control apparatus (111);
an image processor (210) configured to process a first content image, among a plurality of content images received from a content providing apparatus (130), corresponding to the received first control command;
a display (220) configured to display the processed content image; and
a controller (230),
the apparatus **characterized in that:**
the image display apparatus (100) is arranged to store viewing information regarding a content image that a user watches last,
that the controller (230) is arranged to preset and use apparatus information of the first remote control apparatus (111) and of a second remote control apparatus (113) by a pairing process and that the controller (230) is configured, in response to a second control command received via the interface in use while the first content image is displayed in a single-view viewing mode, the second control command being a request from a second remote control apparatus (113) to power the image display apparatus (100), to change a viewing mode from the single-view viewing mode to a multi-view viewing mode, in which the first content image and a second content image among the plurality of content images are displayed, to control the image processor to process the second content image which is displayed last on the image apparatus controlled by the second remote control apparatus,
wherein the controller is further configured to change one of the first content image and the second content image to a third content image selected from among the plurality of content images which are provided by the image display apparatus, based on a control command received from one of the first remote control apparatus and the second remote control apparatus while the image display apparatus operates in the multi-view viewing mode.

2. The image display apparatus as claimed in claim 1, further comprising:
a storage (240) configured to store a setting value regarding the multi-view viewing for each user and update the stored setting value,
wherein the controller (230) is arranged to control the image processor (210) to process each content image based on the updated setting value.

3. The image display apparatus as claimed in claim 2, wherein the setting value comprises at least one of two-dimensional, 2D, and three-dimensional, 3D, information, channel information, and volume information.

4. The image display apparatus as claimed in any one of claims 1 to 3, wherein the number of the control commands is identical to the number of the processed content images.

5. The image display apparatus as claimed in claim 4, wherein the controller (230) is arranged to additionally determine whether a signal is received from 3D glasses (115) in order to determine a format of the multi-view viewing mode, and
when it is determined that a signal is received from the 3D glasses, the controller is arranged to control the image processor (210) to display a 2D image and a 3D image together on a screen of the display (220).

6. A method of driving an image display apparatus according to claim 1, the method comprising:
presetting apparatus information of the first and second remote control apparatuses by a pairing process,
receiving (S500) a first control command for single view viewing from the first remote control apparatus;
processing (S510) a first content image, among a plurality of content images which are provided by the image display apparatus, corresponding to the received first control command; and
displaying (S520) the processed content image;
the method **characterized by:**
in response to a second control command corresponding to a power-on command received from a second remote control apparatus, the second control command requesting the image display apparatus (100) to be powered, while the first content image is displayed in a single-view viewing mode, changing a viewing mode from the single-view viewing mode to a multi-view viewing mode, in which the first content image and a second content image among the plurality of content images are displayed,
controlling processing (S530) of the second content image which is displayed last on the image apparatus controlled by the second remote control apparatus, and
changing one of the first content image and the second content image to a third content image selected from among the plurality of content images which are provided by the image display apparatus, based on a control command received from one of the first remote control apparatus and the second remote control apparatus while the image display apparatus operates in the multi-view viewing mode.

7. The method as claimed in claim 6, further comprising:
storing a setting value regarding the multi-view viewing for each user and update the stored setting value,
wherein in the operation of processing the content images, each content image is processed based on the updated setting value.

8. The method as claimed in claim 6 or claim 7, wherein the setting value comprises at least one of two-dimensional, 2D, and three-dimensional, 3D, information, channel information, and volume information.

9. The method as claimed in any one of claims 6 to 8, wherein the number of the control commands is identical to the number of the processed content images.

10. The method as claimed in claim 8, wherein in the controlling operation, it is additionally determined whether a signal is received from 3D glasses in order to determine a format of the multi-view viewing mode, and
in the operation of processing the content images, when it is determined that a signal is received from the 3D glasses, the content images are processed to display a 2D image and a 3D image together on a screen.

## Patentansprüche

1. Bildanzeigevorrichtung (100), umfassend:
eine Schnittstelle (200), die dazu ausgelegt ist, in Verwendung einen ersten Steuerbefehl zur Einzelansicht-Betrachtung von einer ersten Fernsteuerungsvorrichtung (111) zu empfangen;
einen Bildprozessor (210), der dazu ausgelegt ist, ein erstes Inhaltsbild unter mehreren Inhaltsbildern, die von einer Inhaltsbereitstellungsvorrichtung (130) empfangen werden, das dem empfangenen ersten Steuerbefehl entspricht, zu verarbeiten;
eine Anzeige (220), die dazu ausgelegt ist, das verarbeitete Inhaltsbild anzuzeigen; und
eine Steuerung (230),
wobei die Vorrichtung **dadurch gekennzeichnet ist, dass:**
die Bildanzeigevorrichtung (100) dazu eingerichtet ist, Betrachtungsinformationen bezüglich eines Inhaltsbildes, das ein Benutzer zuletzt ansieht, zu speichern,
die Steuerung (230) dazu eingerichtet ist, Vorrichtungsinformationen der ersten Fernsteuerungsvorrichtung (111) und einer zweiten Fernsteuerungsvorrichtung (113) durch einen Kopplungsprozess voreinzustellen und zu verwenden, und die Steuerung (230) dazu ausgelegt ist, als Reaktion auf einen zweiten Steuerbefehl, der über die Schnittstelle in Verwendung empfangen wird, während das erste Inhaltsbild in einem Einzelansicht-Betrachtungsmodus angezeigt wird,
wobei der zweite Steuerbefehl eine Anforderung von einer zweiten Fernsteuerungsvorrichtung (113) ist, die Bildanzeigevorrichtung (100) mit Leistung zu versorgen, einen Betrachtungsmodus von dem Einzelansicht-Betrachtungsmodus zu einem Mehransicht-Betrachtungsmodus zu ändern, bei dem das erste Inhaltsbild und ein zweites Inhaltsbild unter den mehreren Inhaltsbildern angezeigt werden, um den Bildprozessor zu steuern, das zweite Inhaltsbild zu verarbeiten, das zuletzt auf der Bildvorrichtung angezeigt wird, die durch die zweite Fernsteuerungsvorrichtung gesteuert wird,
wobei die Steuerung ferner dazu ausgelegt ist, entweder das erste Inhaltsbild oder das zweite Inhaltsbild zu einem dritten Inhaltsbild, das aus den mehreren Inhaltsbildern ausgewählt wird, die durch die Bildanzeigevorrichtung bereitgestellt werden, basierend auf einem Steuerbefehl, der von entweder der ersten Fernsteuerungsvorrichtung oder der zweiten Fernsteuerungsvorrichtung empfangen wird, während die Bildanzeigevorrichtung in dem Mehransicht-Betrachtungsmodus arbeitet, zu ändern.

2. Bildanzeigevorrichtung nach Anspruch 1, ferner umfassend:
eine Speicherung (240), die dazu ausgelegt ist, einen Einstellungswert bezüglich der Mehransicht-Betrachtung für jeden Benutzer zu speichern und den gespeicherten Einstellungswert zu aktualisieren,
wobei die Steuerung (230) dazu eingerichtet ist, den Bildprozessor (210) zu steuern, jedes Inhaltsbild basierend auf dem aktualisierten Einstellungswert zu verarbeiten.

3. Bildanzeigevorrichtung nach Anspruch 2, wobei der Einstellungswert zweidimensionale bzw. 2D- und dreidimensionale bzw. 3D-Informationen und/oder Kanalinformationen und/oder Volumeninformationen umfasst.

4. Bildanzeigevorrichtung nach einem der Ansprüche 1 bis 3, wobei die Anzahl der Steuerbefehle mit der Anzahl der verarbeiteten Inhaltsbilder identisch ist.

5. Bildanzeigevorrichtung nach Anspruch 4, wobei die Steuerung (230) dazu eingerichtet ist, zusätzlich zu bestimmen, ob ein Signal von einer 3D-Brille (115) empfangen wird, um ein Format des Mehransicht-Betrachtungsmodus zu bestimmen, und wenn bestimmt wird, dass ein Signal von der 3D-Brille empfangen wird, die Steuerung dazu eingerichtet ist, den Bildprozessor (210) zu steuern, ein 2D-Bild und ein 3D-Bild zusammen auf einem Bildschirm der Anzeige (220) anzuzeigen.

6. Verfahren zur Ansteuerung einer Bildanzeigevorrichtung nach Anspruch 1, wobei das Verfahren Folgendes umfasst:
Voreinstellen von Vorrichtungsinformationen der ersten und zweiten Fernsteuerungsvorrichtung durch einen Kopplungsprozess,
Empfangen (S500) eines ersten Steuerbefehls zur Einzelansicht-Betrachtung von der ersten Fernsteuerungsvorrichtung;
Verarbeiten (S510) eines ersten Inhaltsbildes unter mehreren Inhaltsbildern, die durch die Bildanzeigevorrichtung bereitgestellt werden, das dem empfangenen ersten Steuerbefehl entspricht; und
Anzeigen (S520) des verarbeiteten Inhaltsbildes;
wobei das Verfahren **gekennzeichnet ist durch:**
als Reaktion auf einen zweiten Steuerbefehl, der einem Einschaltbefehl entspricht, der von einer zweiten Fernsteuerungsvorrichtung empfangen wird, wobei der zweite Steuerbefehl anfordert, dass die Bildanzeigevorrichtung (100) mit Leistung versorgt wird, während das erste Inhaltsbild in einem Einzelansicht-Betrachtungsmodus angezeigt wird,
Ändern eines Betrachtungsmodus von dem Einzelansicht-Betrachtungsmodus zu einem Mehransicht-Betrachtungsmodus, bei dem das erste Inhaltsbild und ein zweites Inhaltsbild unter den mehreren Inhaltsbildern angezeigt werden,
Steuern einer Verarbeitung (S530) des zweiten Inhaltsbildes, das zuletzt auf der Bildvorrichtung angezeigt wird, die **durch** die zweite Fernsteuerungsvorrichtung gesteuert wird, und
Ändern entweder des ersten Inhaltsbildes oder des zweiten Inhaltsbildes zu einem dritten Inhaltsbild, das aus den mehreren Inhaltsbildern ausgewählt wird, die **durch** die Bildanzeigevorrichtung bereitgestellt werden, basierend auf einem Steuerbefehl, der von entweder der ersten Fernsteuerungsvorrichtung oder der zweiten Fernsteuerungsvorrichtung empfangen wird, während die Bildanzeigevorrichtung in dem Mehransicht-Betrachtungsmodus arbeitet.

7. Verfahren nach Anspruch 6, ferner umfassend:
Speichern eines Einstellungswerts bezüglich der Mehransicht-Betrachtung für jeden Benutzer und den gespeicherten Einstellungswert aktualisieren,
wobei im Vorgang des Verarbeitens der Inhaltsbilder jedes Inhaltsbild basierend auf dem aktualisierten Einstellungswert verarbeitet wird.

8. Verfahren nach Anspruch 6 oder Anspruch 7, wobei der Einstellungswert zweidimensionale bzw. 2D- und dreidimensionale bzw. 3D-Informationen und/oder Kanalinformationen und/oder Volumeninformationen umfasst.

9. Verfahren nach einem der Ansprüche 6 bis 8, wobei die Anzahl der Steuerbefehle mit der Anzahl der verarbeiteten Inhaltsbilder identisch ist.

10. Verfahren nach Anspruch 8, wobei bei dem Steuervorgang zusätzlich bestimmt wird, ob ein Signal von einer 3D-Brille empfangen wird, um ein Format des Mehransicht-Betrachtungsmodus zu bestimmen, und
im Vorgang der Verarbeitung der Inhaltsbilder, wenn bestimmt wird, dass ein Signal von der 3D-Brille empfangen wird, die Inhaltsbilder verarbeitet werden, sodass ein 2D-Bild und ein 3D-Bild zusammen auf einem Bildschirm angezeigt werden.

## Revendications

1. Appareil d'affichage d'images (100) comprenant :
une interface (200) configurée pour recevoir, à l'usage, une première commande de contrôle pour une visualisation monovue provenant d'un premier appareil de télécommande (111) ;
un processeur d'images (210) configuré pour traiter une première image de contenu, parmi une pluralité d'images du contenu reçues depuis un appareil fournissant du contenu (130), correspondant à la première commande de contrôle reçue ;
un dispositif d'affichage (220) configuré pour afficher l'image de contenu traitée ; et
un contrôleur (230),
l'appareil étant **caractérisé en ce que** :
l'appareil d'affichage d'images (100) est agencé pour stocker des informations de visualisation concernant une image de contenu qu'un utilisateur regarde en dernier,
**en ce que** le contrôleur (230) est agencé pour préparamétrer et utiliser des informations d'appareil du premier appareil de télécommande (111) et d'un deuxième appareil de télécommande (113) par un processus d'appariement et **en ce que** le contrôleur (230) est configuré, en réponse à une deuxième commande de contrôle reçue par le biais de l'interface à l'usage pendant que la première image de contenu est affichée dans un mode de visualisation monovue, la deuxième commande de contrôle étant une requête provenant d'un deuxième appareil de télécommande (113) pour alimenter l'appareil d'affichage d'images (100), pour faire passer un mode de visualisation du mode de visualisation monovue à un mode de visualisation multivue, dans lequel la première image de contenu et une deuxième image de contenu parmi la pluralité d'images de contenu sont affichées, pour contrôler le processeur d'images pour traiter la deuxième image de contenu qui est affichée en dernier sur l'appareil d'images contrôlé par le deuxième appareil de télécommande,
dans lequel le contrôleur est également configuré pour remplacer la première image de contenu ou la deuxième image de contenu par une troisième image de contenu sélectionnée parmi la pluralité d'images de contenu qui sont fournies par l'appareil d'affichage d'images, sur la base d'une commande de contrôle reçue depuis le premier appareil de télécommande ou le deuxième appareil de télécommande pendant que l'appareil d'affichage d'images fonctionne dans le mode de visualisation multivue.

2. Appareil d'affichage d'images selon la revendication 1, comprenant en outre :
un dispositif de stockage (240) configuré pour stocker une valeur de paramétrage concernant la visualisation multivue pour chaque utilisateur et actualiser la valeur de paramétrage stockée,
dans lequel le contrôleur (230) est agencé pour contrôler le processeur d'images (210) pour traiter chaque image de contenu sur la base de la valeur de paramétrage actualisée.

3. Appareil d'affichage d'images selon la revendication 2, dans lequel la valeur de paramétrage comprend au moins un élément parmi des informations bidimensionnelles, 2D, et tridimensionnelles, 3D, des informations de canal, et des informations de volume.

4. Appareil d'affichage d'images selon l'une quelconque des revendications 1 à 3, dans lequel le nombre des commandes de contrôle est identique au nombre des images de contenu traitées.

5. Appareil d'affichage d'images selon la revendication 4, dans lequel le contrôleur (230) est agencé pour déterminer également si un signal est reçu à partir de lunettes 3D (115) afin de déterminer un format du mode de visualisation multivue, et
lorsqu'il est déterminé qu'un signal est reçu depuis les lunettes 3D, le contrôleur est agencé pour contrôler le processeur d'images (210) pour afficher une image 2D et une image 3D ensemble sur un écran du dispositif d'affichage (220).

6. Procédé de pilotage d'un appareil d'affichage d'images selon la revendication 1, le procédé comprenant :
le préparamétrage d'informations d'appareil des premier et deuxième appareils de télécommande par un processus d'appariement,
la réception (S500) d'une première commande de contrôle pour une visualisation monovue provenant du premier appareil de télécommande ;
le traitement (S510) d'une première image de contenu, parmi une pluralité d'images de contenu qui sont fournies par l'appareil d'affichage d'images, correspondant à la première commande de contrôle reçue ; et
l'affichage (S520) de l'image de contenu traitée ;
le procédé étant **caractérisé par** :
en réponse à une deuxième commande de contrôle correspondant à une commande de mise sous tension reçue depuis un deuxième appareil de télécommande, la deuxième commande de contrôle demandant que l'appareil d'affichage d'images (100) soit alimenté, pendant que la première image de contenu est affichée dans un mode de visualisation monovue, le passage d'un mode de visualisation du mode de visualisation monovue à un mode de visualisation multivue, dans lequel la première image de contenu et une deuxième image de contenu parmi la pluralité d'images de contenu sont affichées,
le contrôle du traitement (S530) de la deuxième image de contenu qui est affichée en dernier sur l'appareil d'images contrôlé par le deuxième appareil de télécommande, et
le remplacement de la première image de contenu ou de la deuxième image de contenu par une troisième image de contenu sélectionnée parmi la pluralité d'images de contenu qui sont fournies par l'appareil d'affichage d'images, sur la base d'une commande de contrôle reçue depuis le premier appareil de télécommande ou le deuxième appareil de télécommande pendant que l'appareil d'affichage d'images fonctionne dans le mode de visualisation multivue.

7. Procédé selon la revendication 6, comprenant en outre :
le stockage d'une valeur de paramétrage concernant la visualisation multivue pour chaque utilisateur et actualiser la valeur de paramétrage stockée,
dans lequel, dans l'opération de traitement des images de contenu, chaque image de contenu est traitée sur la base de la valeur de paramétrage actualisée.

8. Procédé selon la revendication 6 ou la revendication 7, dans lequel la valeur de paramétrage comprend au moins un élément parmi des informations bidimensionnelles, 2D, et tridimensionnelles, 3D, des informations de canal, et des informations de volume.

9. Procédé selon l'une quelconque des revendications 6 à 8, dans lequel le nombre des commandes de contrôle est identique au nombre des images de contenu traitées.

10. Procédé selon la revendication 8 dans lequel, dans l'opération de contrôle, il est également déterminé si un signal est reçu depuis des lunettes 3D afin de déterminer un format du mode de visualisation multivue, et
dans l'opération de traitement des images de contenu, lorsqu'il est déterminé qu'un signal est reçu depuis les lunettes 3D, les images de contenu sont traitées pour afficher une image 2D et une image 3D ensemble sur un écran.
